# EUROPÄISCHE PATENTSCHRIFT

(11) **EP 0 927 828 B1**
(45) Veröffentlichungstag und Bekanntmachung des Hinweises auf die Patenterteilung: **12.02.2003**
(21) Anmeldenummer: 98122678.0
(22) Anmeldetag: 30.11.1998
(51) Int. Cl.: F16B 43/00

(54) **Schlitzscheibe für eine Schraube**
Slotted disc for a screw
Rondelle fendue pour une vis

(30) Priorität: 30.12.1997 DE 19758253
(43) Veröffentlichungstag der Anmeldung: 07.07.1999
(73) Patentinhaber: Zumtobel Staff GmbH, 6851 Dornbirn (AT)
(72) Erfinder: Spiegel, Michael, Ing., 6850 Dornbirn (AT); Waibel, Josef, 6845 Hohenems (AT); Bonat, Kurt, 6850 Dornbirn (DE)
(74) Vertreter: Schmidt-Evers, Jürgen, Dipl.-Ing.

(56) Entgegenhaltungen:
- DE-A- 3 236 161
- FR-A- 2 155 683
- GB-A- 1 147 171

## Beschreibung

Die Erfindung bezieht sich auf eine Schlitzscheibe nach dem Oberbegriff des Anspruchs 1.

In der Verschraubungstechnik werden sogenannte Unterlegscheiben für Schraubenköpfe verwendet, um die vom Schraubenkopf im Befestigungszustand ausgehende Spannkraft am zu befestigenden Gegenstand auf eine Fläche zu übertragen, die größer ist als die Schraubenkopffläche. Hierdurch wird die Flächenpressung am verschraubten Gegenstand verringert. Bei Verschraubungssituationen, in denen die Schraube den Verschraubungsgegenstand von oben vertikal durchsetzt, liegt eine sogenannte Unterlegscheibe auf dem Verschraubungsgegenstand in stabiler Lage auf.

Bei Verschraubungssituationen, in denen die Schraube den Verschraubungsgegenstand von der Seite her oder von unten durchsetzt ergibt sich dagegen bei den bekannten Schlitzscheiben eine labile Lage, aus der die Schlitzscheibe von der Schraube abrutschen kann. Die bekannte Schlitzscheibe neigt dazu, vom Schraubenschaft weg zu wandern und sich somit vom Schraubenschaft zu lösen und herunterzufallen. Diese Neigung wird durch Vibrationen oder Erschütterungen, die z.B. bei der Montage des zu verschraubenden Gegenstandes entstehen können unterstützt, was im Montage- oder Demontagebetrieb kaum zu vermeiden ist.

Das vorbeschriebene Problem ergibt sich auch bei einer Leuchtenbefestigung, z.B. beim Befestigen eines Leuchtengehäuses, sowohl an einer Decke bei Deckenleuchten, bei denen die Schrauben von unten eingeschraubt werden, als auch bei der Befestigung an einer Wand bei Wandleuchten, bei denen die wenigstens eine Befestigungsschraube horizontal und von der Seite her den zu befestigenden Gegenstand durchsetzen.

Der Erfindung liegt die Aufgabe zugrunde, eine Schlitzscheibe der im Oberbegriff des Anspruchs 1 angegebenen Art so zu verbessern, daß ein Herunterrutschen von der Befestigungsschraube verhindert oder zumindest erschwert ist.

Diese Aufgabe wird durch die Merkmale des Anspruchs 1 gelöst.

Bei der erfindungsgemäßen Ausgestaltung befindet sich der Schwerpunkt der Schlitzscheibe bezgl. einer axialen Mittelebene des Loches für die Schraube, zu der sich der Schlitz quer erstreckt, auf der Seite, auf der sich der Schlitz befindet. Infolgedessen wirkt an der Schlitzscheibe ein durch das Gewicht der Schlitzscheibe hervorgerufenes Drehmoment, das die Schlitzscheibe in eine auf die Schlitzmündung gerichtete Richtung beaufschlagt und zu ziehen sucht. Bei einem selbsttätigen Verrutschen der Scheibe erfolgt bei der erfindungsgemäßen Ausgestaltung deshalb eine Relativverschiebung zwischen der Schlitzscheibe und dem Schraubenschaft, bei der der Schraubenschaft zum Grund des Schlitzes gelangt, in dessen Bereich die Schlitzscheibe stabil gehalten ist. Dies gilt insbesondere bei einer Verschraubung von unten, bei der die Schlitzscheibe auf dem Schraubenkopf aufliegt, als auch bei einer seitlichen Verschraubung, bei der die Schlitzscheibe aufgrund des vorgenannten Drehmomentes geneigt ist, sich in eine Stellung zu drehen, in der die Schlitzmündung nach unten weist und der Schraubenschaft sich im Schlitzgrund befindet und dadurch ebenfalls stabil gehalten ist.

Die erfindungsgemäße Schlitzscheibe läßt sich natürlich auch für Schraubenbefestigungen verwenden, bei denen die Schraube von oben eingeschraubt ist, wobei sich die erfindungsgemäßen Vorteile insbesondere dann bemerkbar machen, wenn die Schraube schräg angeordnet ist.

Die erfindungsgemäßen Vorteile ergeben sich auch bei einer Schlitzscheibe nach Anspruch 6. Bei dieser erfindungsgemäßen Lösung ist die Schlitzscheibe ebenfalls geneigt, aufgrund des an ihr wirksamen, durch die Erdanziehung verursachten Drehmomente in Richtung auf die Schlitzausmündung zu wandern, so daß dann, wenn die Scheibe verrutscht, der Schraubenschaft in den Schlitzgrund gelangt und die Schlitzscheibe stabil gehalten ist.

In den Unteransprüchen sind Merkmale enthalten, die zu vorteilhaften Formgebungen führen, die unter anderem das erfindungsgemäße Drehmoment an der Schlitzscheibe gewährleisten, die die Schlitzscheibe stabilisieren, und zwar insbesondere dann, wenn Senkkopfschrauben verwendet werden, die die Schlitzscheibe aufgrund der Konuswirkung zu spreizen suchen, und die sich auf einfache, kostengünstige und schnell herstellbare sowie in einfacher Weise montierbare und demontierbare Ausgestaltungsmerkmale beziehen, die Sicherheit verbessern und sich kostengünstig herstellen lassen.

Nachfolgend werden die Erfindung und weitere durch sie erzielbare Vorteile anhand von mehreren Zeichnungen erläutert. Es zeigen
- Fig. 1: eine erfindungsgemäße Schlitzscheibe in der Vorderansicht;
- Fig. 2: die Schlitzscheibe in der Fig. 1 in der Seitenansicht von rechts;
- Fig. 3: die Schlitzscheibe in der Unteransicht;
- Fig. 4: einen Zuschnitt der Schlitzscheibe in der Draufsicht;
- Fig. 5: die Schlitzscheibe nach den Fig. 1 bis 4 in perspektivischer Ansicht von unten;
- Fig. 6: eine erfindungsgemäße Schlitzscheibe in abgewandelter Ausgestaltung in perspektivischer Darstellung von unten;
- Fig. 7: eine erfindungsgemäße Schlitzscheibe in weiter abgewandelter Ausgestaltung in perspektivischer Unteransicht;
- Fig. 8: eine Schlitzscheibe in weiter abgewandelter Ausgestaltung in perspektivischer Unteransicht;
- Fig. 9: eine erfindungsgemäße Schlitzscheibe in weiter abgewandelter Ausgestaltung im vertikalen Längsschnitt;
- Fig. 10: die Schlitzscheibe nach Fig. 9 in der Unteransicht;
- Fig. 11: die Schlitzscheibe nach Fig. 9 und 10 als Zuschnitt in der Unteransicht;
- Fig. 12: eine erfindungsgemäße Schlitzscheibe in weiter abgewandelter Ausgestaltung im vertikalen Längsschnitt;
- Fig. 13: die Schlitzscheibe nach Fig. 11 in der Unteransicht;
- Fig. 14: die Schlitzscheibe nach Fig. 12 und 13 in der Unteransicht als Zuschnitt.

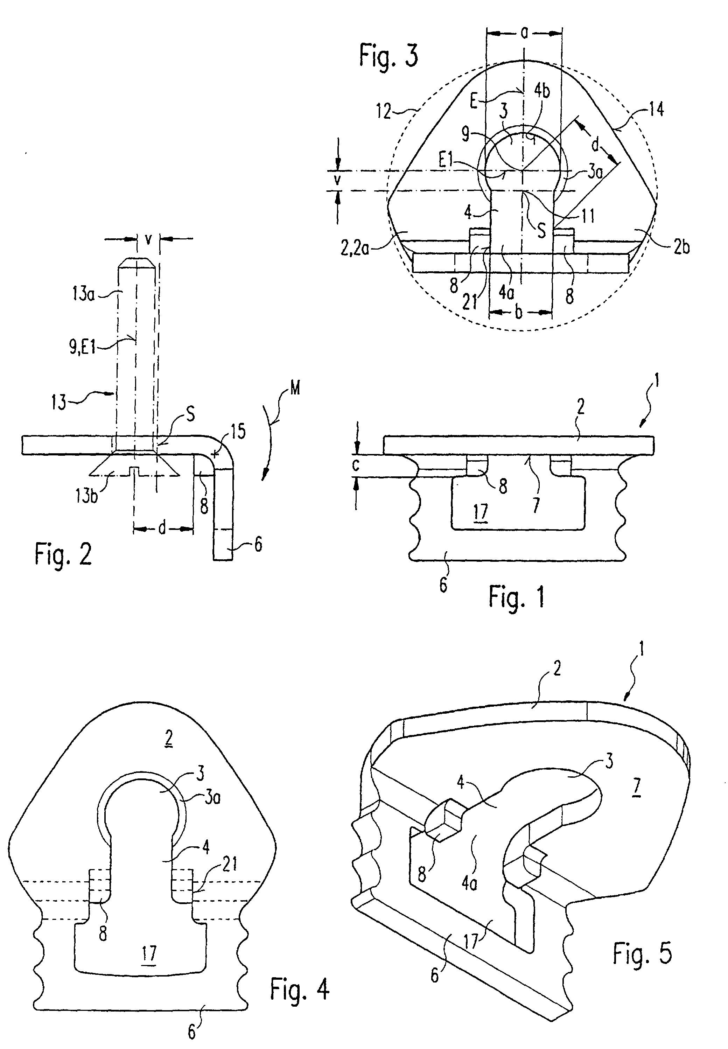

Die wesentlichen Elemente der allgemein mit 1 bezeichneten Schlitzscheibe sind ein Basiskörper in Form einer Scheibe 2 mit einem Loch 3 runder Grundform in seinem mittleren Bereich und einem Schlitz 4, der sich vom Loch 3 zum Umfang der Scheibe 2 erstreckt und dort ausmündet. Die Ausmündungsöffnung ist mit 5 bezeichnet. Die Schlitzscheibe 1 nach den Fig. 1 bis 8 wird in verschiedenen Größen hergestellt, die durch die Schraubengröße bestimmt ist, wobei unterschiedlich große Schlitzscheiben 1 sich durch die Querschnittsabmessung a des Loches 3 unterscheiden, und wobei die übrigen Abmessungen der Schlitzscheibe 1 in einem etwa gleichen Verhältnis zur Größe des Loches 3 stehen und somit ebenfalls entsprechend größer sind.

Die Breite b des Schlitzes 4 kann der Querschnittsabmessung a entsprechen. Bei der vorliegenden Ausgestaltung ist aus noch zu beschreibenden Gründen die Querschnittsabmessung b etwas kleiner bemessen als die Querschnittsabmessung a und mit einem Bewegungsspiel größer bemessen als der Schaft einer ebenfalls noch zu beschreibenden Schraube.

Desweiteren weist die Schlitzscheibe 1 noch einen vorzugsweise einstückig angeformten Griffschenkel 6 und ein oder zwei am Rand der Schlitzöffnung 4a angeordnete, von der breitseitigen Schraubenkopfanlagefläche 7 abstehende Anschlagvorsprünge 8 auf, die weiter unten im einzelnen noch beschrieben werden. Der Griffschenkel 6 bildet eine Querstrebe zur Stabilisierung der durch den Schlitz 4 beabstandeten Scheibenschenkel 2a, 2b in deren Endbereich.

Wie insbesondere aus Fig. 3 zu entnehmen ist, lassen sich drei wesentliche axiale Ebenen für die Schlitzscheibe 1 definieren, nämlich eine erste axiale Längsebene E, die sich längs und mittig durch den Schlitz 4 erstreckt, und eine zweite axiale Querebene El, die sich rechtwinklig zur vorgenannten Längsebene E oder zum Schlitz 4 erstreckt und die Längsmittelachse 9 des Loches 3 enthält.

Desweiteren gibt es eine weitere Längsmittelachse 11, eines Umkreises 12 für die Scheibe 2. Die Längsmittelachsen 9, 11 können koaxial angeordnet sein. Bei der vorliegenden Ausgestaltung ist die Längsmittelachse 9 des Loches 3 bezgl. der Längsmittelachse 11 des Umkreises zur der Schlitzöffnung 4a abgewandten Seite hin versetzt.

Der Schwerpunkt S der Schlitzscheibe 1 ist bezgl. der sich rechtwinklig zur Längsmittelebene E und in der Längsmittelachse 9 erstreckenden Querebene E1 auf der Seite der Scheibe 2 angeordnet, auf der sich der Schlitz 4 befindet. Vorzugsweise besteht zwischen der Längsmittelachse 9 des Lochs 3 und dem Schwerpunkt S ein Abstand von einigen Millimetern. Dieser Versatz v des Schwerpunktes S ist erwünscht, weil bei Auflage der Schlitzscheibe 1 auf den Schraubenkopf 13a einer das Loch 3 durchsetzenden Schraube 13 ein Dreh- oder Kippmoment M an der Schlitzscheibe 1 erzeugt, das in Fig. 2 im Uhrzeigersinn gerichtet ist und die Schlitzscheibe 1 mit der Schlitzöffnung 4a zu kippen sucht, so daß die Schlitzscheibe 1 geneigt ist, bei Erschütterungen oder wenn sie angestoßen wird, so zu verrutschen, daß der Schlitzgrund 4b gegen den Schraubenschaft 13a stößt. Hierdurch ist die Schlitzscheibe 1 gegen ein unbeabsichtigtes Abrutschen von der Schraube 13 gesichert.

Zum Versatz des Schwerpunktes S bezgl. der Längsmittelachse 9 trägt im weiteren der Griffschenkel 6 bei, bei dem es sich um einen im wesentlichen viereckigen, hier rechteckigen, Scheibenabschnitt handelt, der entlang einer im Bereich der Schlitzöffnung 4a quer zur Längsmittelebene E verlaufenden Scheitelachse 15 abgewinkelt, insbesondere abgebogen ist und zwar zu der Seite hin, an der sich der Schraubenkopf 13b befindet. Zwecks Vergrößerung der Griffestigkeit können die einander gegenüberliegenden Seitenkanten bzw. Schmalseiten des Griffschenkels 6 gewellt oder gezackt sein, wie es insbesondere aus Fig. 1 und 4 zu entnehmen ist. An die Schlitzöffnung 4a angrenzend ist im Griffschenkel 6 ein z.B. etwa rechteckiger Ausschnitt 17 angeordnet, in den der Schlitz 4 mündet, und der so groß ist, daß der Schraubenkopf 13b bei seitlicher Einführung in den Schlitz 4 mit Bewegungsspiel durch den Ausschnitt 17 bewegbar ist. Der Griffschenkel 6 bildet somit einen U-förmigen Rahmen. Der Ausschnitt 17 weist einen Abstand c von der Scheibe 2 auf, der der Höhe der Anschlagansätze 8 entspricht, gegen den oder die der Schraubenkopf 13b stößt, wenn die Schlitzscheibe 1 vom Schraubenkopf 13b abwandern sollte, und deshalb gehalten bleibt.

Der Versatz v des Schwerpunktes S bezgl. der Mittelachse 9 des Loches 3 bildet somit eine erste Sicherungsvorrichtung, die ein Abrutschen der Schlitzscheibe 1 vom Schraubenkopf 13b in einer Montagezwischenstellung verhindert, die weiter unten noch beschrieben wird. Selbst bei kleinen Erschütterungen oder Vibration, die sich auf die Schraube 13 übertragen, verbleibt die Schlitzscheibe 1 in ihrer gegen unbeabsichtigtes Verlieren gesicherten Stellung.

Anstelle dieses Schwerpunktversatzes oder zusätzlichen kann zur Verhinderung des Abrutschens der Scheibe 2 vom Schraubenkopf 2b an einer oder können an beiden Seiten des Schlitzes 4 auf der Schraubenkopfanlagenfläche 7, jeweils ein Anschlagvorsprung 8 vorgesehen sein, gegen den bei einem Verrutschen der Scheibe 2 in die entsprechende Richtung der Schraubenkopf 13b stößt, wodurch ebenfalls eine Sicherung gegen unbeabsichtigtes Abrutschen vom Schraubenkopf gewährleistet ist. Der Abstand d des oder der Anschlagsätze 8 von der Längsmittelachse 9 des Loches 3 ist deshalb gleich oder größer bemessen, als die halbe Schraubenkopfbreite.

Im Rahmen der Erfindung kann der Versatz v des Schwerpunktes S und/oder der wenigstens eine Anschlagansatz 8 oder können der Schwerpunktversatz v und der Anschlagansatz 8 vorgesehen sein.

Anstelle oder zusätzlich zu der oder den Sicherungsvorrichtungen, die durch den wenigstens einen Anschlagvorsprung 8 und/oder durch den Versatz v des Schwerpunkts S gebildet sind, kann die durch die Differenz zwischen der Breite b des Schlitzes 4 und dem Durchmesser des Schraubenlochs 3 gebildete Sicherung gegen ein unbeabsichtigtes Abrutschen der Schlitzscheibe 1 vorhanden sein. Diese Sicherungsvorrichtung eignet sich für einen kegelförmigen Schraubenkopf 13b, wie er bei Senkkopfschrauben vorhanden ist, bei einer Befestigung von unten. Die Differenz bildet für den kegelförmigen Schraubenkopf eine Einraststelle, die die Schlitzscheibe 1 aufgrund des Eigengewichts formschlüssig daran hindert, unbeabsichtigt abzurutschen. Außerdem ist bei dieser Ausgestaltung die Flächenpressung zwischen der Scheibe 2 und dem kegelförmigen Schraubenkopf 13b verringert, insbesondere dann, wenn die Kante des Schraubenloches 3 durch eine kegelförmige Fase 3a gebrochen ist, wie es in Fig. 3 und 4 dargestellt ist.

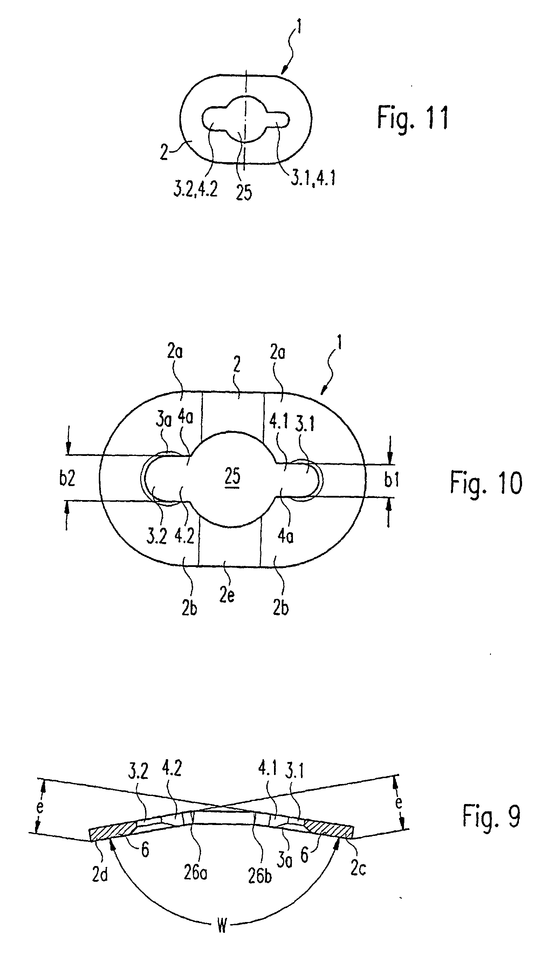

Eine solche Fase 3a bildet eine Einraststelle für den kegelförmigen Schraubenkopf 13b, und sie bildet deshalb auch dann eine Sicherungsvorrichtung gegen unbeabsichtigtes Abrutschen der Schlitzscheibe 1 von der Schraube 13, wenn der Durchmesser des Schraubenlochs 3 und die Breite b des Schlitzes 4 gleich groß sind, wie es die Figuren 9,10,12 und 13 zeigen. Dies ist in den Figuren 1 bis 8 aus Vereinfachungsgründen nicht dargestellt.

Vorzugsweise ist der Anschlagansatz 8 durch eine ausgebogene Zunge gebildet, die jeweils durch einen sich parallel zum Schlitz 4 erstreckenden und vom Ausschnitt 17 ausgehenden Trennschnitt 21 frei geschnitten und zur Schraubenkopfanlagefläche 7 hin ausgebogen ist. Dabei können die Anschlagansätze 8 einen in Fig. 2 und 5 sichtbaren Abstand von Griffschenkel 6 aufweisen.

Bei allen vorbeschriebenen Ausgestaltungsmöglichkeiten zur Sicherung der Schlitzscheibe 1 auf der Schraube 13 bildet der Griffschenkel 6 einen Stabilisator, der die zu beiden Seiten des Schlitzes 4 vorhandenen Scheibenschenkel 2a, 2b gegen eine Spreizung stabilisiert. Eine solche Spreizung kann insbesondere dann auftreten, wenn die Schraube 13 durch eine Senkkopfschraube gebildet ist, deren keilförmiger Kopf die Scheibenschenkel 2a, 2b beim Anziehen zu Spreizen sucht.

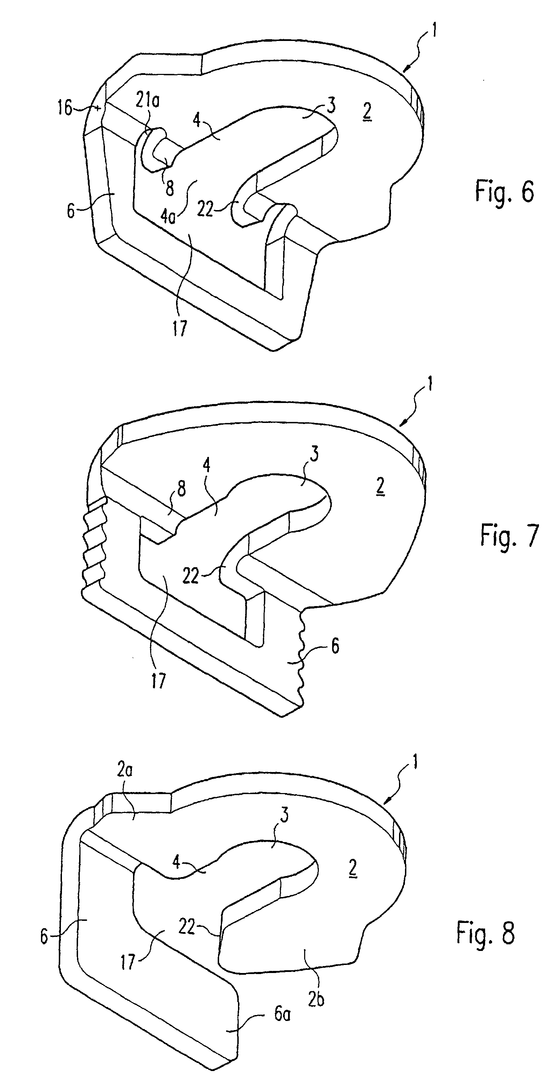

Die Ausführungsbeispiele nach den Fig. 6 und 7 bei denen gleiche oder vergleichbare Teile mit gleichen Bezugszeichen versehen sind, unterscheiden sich von dem vorbeschriebenen Ausführungsbeispiel dadurch, daß die Anschlagansätze 8 in der Ebene des Griffschenkels 6 angeordnet sind und gemäß Fig. 7 durch die Abwinklung bzw. Abbiegung des Griffschenkels 6 als dessen Teile gebildet sind, wobei bei der Ausgestaltung nach Fig. 6 die Freischnitte 21 durch kleine Ausschnitte 21a gebildet sind und die Scheitelachsen der Anschlagansätze 8 und des Griffschenkels 6 koaxial verlaufen, so daß diese Teile gemeinsam gebogen werden können.

Es ist außerdem vorteilhaft, den Schlitz 4 im Bereich der Schlitzöffnung 4a durch Eckenrundungen oder durch schräge Flanken 22 divergent auszubilden, wie es die Fig. 6 bis 8 zeigen. Mit dieser Erweiterung ist ein leichteres Einführen der Schraube 13 in den Schlitz 4 möglich.

Beim Ausführungsbeispiel nach Fig. 8 bei dem gleiche Teile ebenfalls mit gleichen Bezugszeichen versehen sind, ist der Griffschenkel nur mit dem einen Scheibenschenkel 2a verbunden. Der für den Schraubenkopf 13b erforderliche Freiraum wird durch eine winkelförmige Form des Griffschenkels 6 gebildet, wobei zwischen dem sich parallel zur Scheibe 2 erstreckenden Griffschenkelabschnitt 6a und dem benachbarten Scheibenschenkel 2b ein Freiraum vorhanden ist.

Das Ausführungsbeipiel nach den Fig. 9 bis 11, bei dem gleiche oder vergleichbare Teile mit gleichen Bezugszeichen bezeichnet sind, unterscheidet sich in mehrfacher Hinsicht von den vorbeschriebenen Ausführungsbeispielen. Ein wesentlicher Unterschied besteht darin, daß der Schlitz 4 nicht am Umfang der Scheibe 2 ausmündet sondern in ein insbesondere rundes Schraubenkopfloch 25 im mittleren Bereich der Scheibe 2. Vorzugsweise sind zwei Schlitze 4.1, 4.2 jeweils von einem Schraubenloch 3.1, 3.2 bzw. Schlitzende ausgehend vorgesehen, die in das Schraubenkopfloch 25 münden, hier einander gegenüberliegend in der Längsrichtung einer sich vorzugsweise länglich erstreckenden Scheibe 2. Die Löcher 3.1, 3.2 und Breiten der Schlitze 4.1, 4.2 sind unterschiedlich groß und somit für wenigstens zwei unterschiedlich große Schrauben 13 geeignet. Bei der vorliegenden Ausgestaltung beträgt die Schlitzbreite b1 des kleinen Schlitzes 4.1 etwa 4 mm oder etwas mehr (Bewegungsspiel) und die Schlitzbreite b2 des anderen Schlitzes 4.2 etwa 6 mm oder etwas mehr. Hierdurch eignet sich die Scheibe 2 nicht nur für Schrauben 13 von 4 mm und 6 mm Durchmesser sondern für Schrauben von 3 mm bis 6 mm Durchmesser, d.h. für alle Schrauben üblicher Leuchtengrößen, so daß sich diese Schlitzscheibe 1 für ein Großteil oder alle Leuchtengrößen eignet.

Es ist vorteilhaft, auch die Schlitzscheibe 1 gemäß dem Ausführungsbeispiel nach den Fig. 9 bis 11 mit einem Griffschenkel 6 zu versehen, um sie zu stabilisieren und die Montage zu vereinfachen. Beim vorliegenden Ausführungsbeispiel ist ein Griffschenkel 6 dadurch gebildet, daß die Scheibe 2 zwischen den und quer zu den Schlitzen 4.1, 4.2 abgewinkelt ist, wobei die Abwinklungsschenkel 2c, 2d an einer gemeinsamen Scheitelachse oder an zwei, einen Abstand voneinander aufweisenden Scheitelachsen 26a,26b abgewinkelt sein können und einen stumpfen Winkel W zwischen sich einschließen, der zur Schraubenkopfanlageseite 7 hin offen ist. Bei dieser Ausgestaltung erstreckt sich der jeweils nicht benutzte Abwinklungsschenkel 2c, 2d quer zur Ebene des anderen Abwinklungsschenkels, wodurch jeweils der allgemein mit 6 bezeichnete Griffschenkel gebildet ist, ohne das ein besonderer Griffschenkel anzuordnen ist, wie es beim vorbeschriebenen Ausführungsbeispiel der Fall ist.

Bei der Ausgestaltung nach Fig. 9 bis 11 sind die jeweils benutzten und von einer Schraube 13 durchfaßten Scheibenschenkel 2a, 2b durch die anderen gegenüberliegenden Scheibenschenkel 2a, 2b gegen Spreizung stabilisiert.

Die sich in der Funktionsstellung durch die Abwinklung jeweils ergebende Einbauhöhe der Griffschenkel 6 ist mit e bezeichnet. Die Ausgestaltung nach Fig. 9 bis 11 eignet sich besonders gut für eine niedrige Einbauhöhe.

Es ist bei allen Ausführungsbeispielen vorteilhaft, wenn die Löcher 3 im Bereich ihrer außenseitigen Lochränder die bereits beschriebene konische Fase 3a aufweisen, deren Kegelwinkel dem Kegelwinkel von zugehörigen Senkschrauben entspricht. Diese Fasen 3a bilden Vertiefungen und somit Einraststellen für die Schraubenköpfe 13 und folglich auch Sicherungsvorrichtungen, die zusätzlich zum oder anstelle des ebenfalls vorhandenen Versatz v des Schwerpunktes S eine Sicherungsvorrichtung bilden, die ein unbeabsichtigtes Verrutschen der Schlitzscheibe 1 im Sinne einer Einrastung aufgrund des Eigengewichtes verhindert. Bei dieser Ausgestaltung befindet sich der Schwerpunkt S im mittleren Bereich der Schlitzscheibe 1. Wie insbesondere Fig. 13 verdeutlicht, kann der breitere Schlitz 4.2 länger sein als der schmalere Schlitz 4.1.

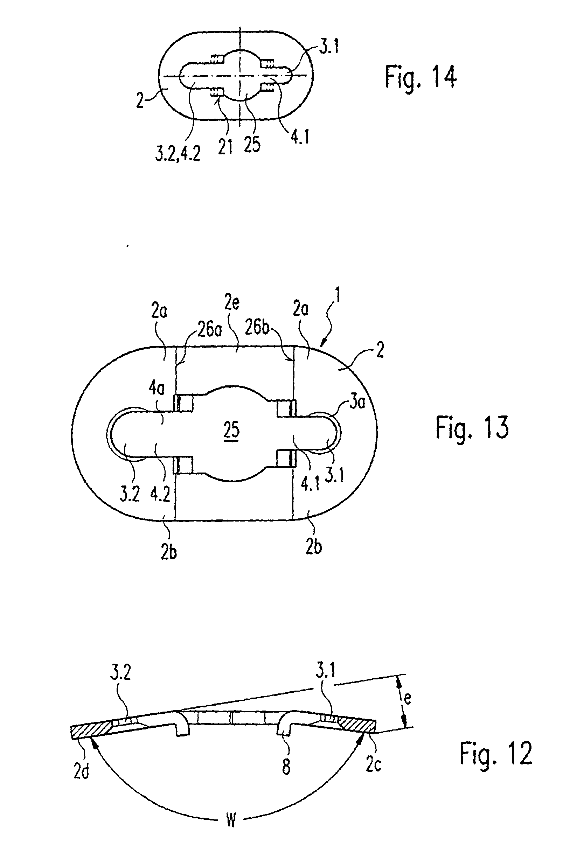

Bei der Ausgestaltung nach Fig. 12 bis 14, bei der gleiche oder vergleichbare Teile mit gleichen Bezugszeichen versehen sind, sind im Bereich der Schlitzmündungen 4a Anschlagansätze 8 vorgesehen, die vorzugsweise durch eingeschnittene und ausgebogene Zungen der Scheibe 2 gebildet sind, wie es bei den vorbeschriebenen Ausführungsbeispielen bereits erklärt worden ist. Einer näheren Erklärung der hier vier Stück vorhandenen Anschlagansätze 8 bedarf es deshalb nicht.

Bei allen Ausführungsbeispielen kann die jeweilige Schlitzscheibe 1 als einstückiges Stanz/Biegeteil aus Metall, insbesondere Stahl, hergestellt werden.

Im Rahmen der Erfindung ist es möglich, für beide Scheibenschenkel 26a, 26b eine gemeinsame Scheitelachse vorzusehen oder zwei in der Längsrichtung voneinander beabstandete Scheitelachsen 26a, 26b vorzusehen, wie es das Ausführungsbeispiel zeigt. Bei dieser Ausgestaltung ist im Bereich des Schraubenkopfloches 25 ein sich gerader erstreckender Scheibenabschnitt 2e vorhanden.

## Patentansprüche

1. Schlitzscheibe (1), bestehend aus einer Scheibe (2) mit einem Loch (3) für den Schaft (13a) einer Kopfschraube (13), wobei von dem Loch (3) sich ein Schlitz (4) zu einer Schlitzöffnung (4a) erstreckt, mit der die Schlitzscheibe (1) auf den Schaft (13a) der Kopfschraube (13) aufschiebbar ist,
**dadurch gekennzeichnet,**
**daß** der Schwerpunkt (S) der Schlitzscheibe (1) bezgl. einer die Mittelachse (9) des Lochs (3) enthaltenden und sich quer zum Schlitz (4) erstreckenden Querebene (E1) zu der Seite hin versetzt (v) angeordnet ist, auf der sich die Schlitzöffnung (4a) befindet.

2. Schlitzscheibe nach Anspruch 1,
**dadurch gekennzeichnet,**
**daß** sie auf der dem Schwerpunkt (S) abgewandten Seite mit keilförmig verlaufenden Flanken (14) konvergent geformt ist.

3. Schlitzscheibe nach Anspruch 1 oder 2,
**dadurch gekennzeichnet,**
**daß** in einem oder in beiden Randbereichen des Schlitzes (4), vorzugsweise im Bereich der Schlitzöffnung (4a), jeweils ein Anschlagansatz (8) für den Kopf (13b) der Schraube (13) angeordnet ist.

4. Schlitzscheibe nach Anspruch 3,
**dadurch gekennzeichnet,**
**daß** der oder die Anschlagansätze (8) jeweils durch eine Zunge gebildet ist bzw. sind, die entlang eines Trennschnitts (21) freigeschnitten und ausgebogen ist.

5. Schlitzscheibe nach einem der vorherigen Ansprüche,
**dadurch gekennzeichnet,**
**daß** der Schlitz (4) mit der Schlitzöffnung (4a) am Umfang der Scheibe (2) ausmündet.

6. Schlitzscheibe nach einem der vorherigen Ansprüche,
**dadurch gekennzeichnet,**
**daß** die durch den Schlitz (4) voneinander beabstandeten Scheibenschenkel (2a, 2b) im Bereich der Schlitzöffnung (4a) durch eine Querstrebe miteinander verbunden sind.

7. Schlitzscheibe nach Anspruch 6,
**dadurch gekennzeichnet,**
**daß** die Querstrebe durch einen Griffschenkel (6) gebildet ist, der zu der Seite hin absteht, insbesondere abgebogen ist, an der sich der Kopf (13b) der Schraube (13) befindet, und in ihrem dem Schlitz (4) benachbarten Bereich einen Freiraum oder eine Ausnehmung (17) aufweist, der bzw. die größer ist als der Schraubenkopf (13b).

8. Schlitzscheibe nach Anspruch 7,
**dadurch gekennzeichnet,**
**daß** der Griffschenkel (6) eine seine Griffestigkeit erhöhende Struktur aufweist, insbesondere gewellt ist oder Riefen aufweist.

9. Schlitzscheibe nach Anspruch 7 oder 8,
**dadurch gekennzeichnet,**
**daß** der Ausschnitt (17) einen Abstand (d) von der Scheibe (2) aufweist.

10. Schlitzscheibe nach einem der Ansprüche 7 bis 9,
**dadurch gekennzeichnet,**
**daß** der Schlitz (4) in ein vorzugsweise rundes Schraubenkopfloch (25) mündet, das größer ist als der Schraubenkopf (13b).

11. Schlitzscheibe nach Anspruch 10,
**dadurch gekennzeichnet,**
**daß** ein zweiter, sich von einem Loch (3.1, 3.2) für den Schraubenschaft (13a) zum Schraubenkopfloch (25) erstreckender Schlitz (4.1, 4.2) unterschiedlicher Breite (b1, b2) vorgesehen ist.

12. Schlitzscheibe nach Anspruch 11,
**dadurch gekennzeichnet,**
**daß** die Schlitze (4.1, 4.2) einander gegenüberliegend angeordnet sind.

13. Schlitzscheibe nach einem der vorherigen Ansprüche,
**dadurch gekennzeichnet,**
**daß** die Scheibe (2) in der Längsrichtung des oder der Schlitze (4; 4.1, 4.2) länglich ausgebildet ist.

14. Schlitzscheibe nach Anspruch 12 oder 13,
**dadurch gekennzeichnet,**
**daß** die Scheibe (2) um eine oder zwei voneinander beabstandete, zwischen den Schlitzen (4.1, 4.2) verlaufende Scheitelachsen (26a, 26b) abgewinkelt ist.

15. Schlitzscheibe, insbesondere nach einem der vorherigen Ansprüche,
**dadurch gekennzeichnet,**
**daß** der Durchmesser (a) des Loches (3; 3.1, 3.2) für den Schaft (13a) der Schraube (13) größer ist als die Breite (b) der oder des zugehörigen Schlitzes (4; 4.1, 4.2).

16. Schlitzscheibe, insbesondere nach einem der vorherigen Ansprüche,
**dadurch gekennzeichnet,**
**daß** die Randkante des Loches (3; 3.1, 3.2) für den Schaft (13a) der Schraube (13) durch eine Fase (3a) gebrochen ist.

## Claims

1. Split washer (1), consisting of a washer (2) having a hole (3) for the shaft (13a) of a headed screw (13), a slit (4) extending from the hole (3) to a slit opening (4a) with which the split washer (1) can be pushed onto the shaft (13a) of the headed screw (13),
**characterised in that**,
the centre of gravity (S) of the split washer (1) is, referred to a transverse plane (E1) containing the middle axis (9) of the hole (3) and extending transversely of the slit (4), arranged offset (v) to the side on which the slit opening (4a) is located.

2. Split washer according to claim 1,
**characterised in that**,
on the side away from the centre of gravity (S) it is formed convergently with flanks (14) developing in a wedge shape.

3. Split washer according to claim 1 or 2,
**characterised in that**,
in one of both edge regions of the slit (4), preferably in the region of the slit opening (4a), there is arranged a respective stop projection (8) for the head (13b) of the screw (13).

4. Split washer according to claim 3,
**characterised in that**,
the stop projection or projections (8) is or are formed by a respective tongue which is cut free along a separating cut (21) and bent out.

5. Split washer according to any preceding claim,
**characterised in that**,
the slit (4) opens, with the slit opening (4a), at the periphery of the washer (2).

6. Split washer according to any preceding claim,
**characterised in that**,
the limbs (2a, 2b) of the washer spaced from one another by the slit (4) are connected with one another, in the region of the slit opening (4a), by means of a transverse strut.

7. Split washer according to claim 6,
**characterised in that**,
the transverse strut is formed by means of a grip limb (6) which stands up, in particular is bent, towards the side at which the head (13b) of the screw (13) is located, and which has in its region neighbouring the slit (4) a free space or recess (17) which is larger than the screw head (13b).

8. Split washer according to claim 7,
**characterised in that**,
the grip limb (6) has a structure which increases its gripabiliity, in particular is corrugated or has furrows.

9. Split washer according to claim 7 or 8,
**characterised in that**,
the cut-out (17) has a spacing (d) from the washer (2).

10. Split washer according to any of claims 7 to 9,
**characterised in that**,
the slit (4) opens into a preferably round screw head hole (25) which is larger than the screw head (13b).

11. Split washer according to claim 10,
**characterised in that**,
there is provided a second slit (4.1, 4.2), of different width (b1, b2), extending from a hole for the screw shaft (13a) to the screw head hole (25).

12. Split washer according to claim 11,
**characterised in that**,
the slits (4,1, 4,2) are arranged opposite to one another.

13. Split washer according to any preceding claim,
**characterised in that**,
the washer (2) is formed to be elongate in the longitudinal direction of the slit or slits (4.1, 4.2).

14. Split washer according to claim 12 or 13,
**characterised in that**,
the washer (2) is angled around one or two spaced apart apex axes (26a, 26b) extending between the slits (4.1, 4.2).

15. Split washer according to any preceding claim,
**characterised in that**,
the diameter (a) of the hole (3; 3.1; 3.2) for the shaft (13a) of the screw (13) is greater than the width of the associated slit or slits (4; 4.1, 4.2).

16. Split washer according to any preceding claim,
**characterised in that**,
the peripheral edge of the hole (3; 3.1, 3.2) for the shaft of the screw (13) is interrupted by a chamfer.

## Revendications

1. Rondelle à fente (1), comprenant une rondelle (2) avec un trou (3) pour la tige (13a) d'une vis à tête (13), dans laquelle une fente (4) s'étend du trou (3) en direction d'une ouverture de fente (4a), grâce à laquelle la rondelle à fente (1) peut être déplacée sur la tige (13a) de la vis à tête (13),
**caractérisée en ce que** le centre de gravité (S) de la rondelle à fente (1), par rapport à un plan transversal (E1) incluant l'axe central (9) du trou (3) et s'étendant transversalement par rapport à la fente (4), est décalé (v) vers la face sur laquelle se trouve l'ouverture de fente (4a).

2. Rondelle à fente selon la revendication 1,
**caractérisée en ce qu'**elle est formée de manière convergente sur la face opposée au centre de gravité (S) avec des flancs (14) à développement conique.

3. Rondelle à fente selon la revendication 1 ou 2,
**caractérisée en ce que** dans une zone de rive, ou les deux, de la fente (4), un épaulement de butée (8) pour la tête (13b) de la vis (13) est disposé, préférentiellement dans la zone de l'ouverture de fente (4a).

4. Rondelle à fente selon la revendication 3,
**caractérisée en ce que** le(s) épaulement(s) de butée (8) est (sont) formé(s) dans chaque cas par une languette qui est découpée le long d'une rainure de séparation (21) et est recourbée.

5. Rondelle à fente selon l'une des revendications qui précèdent,
**caractérisée en ce que** la fente (4) avec son ouverture de fente (4a) débouche à la périphérie de la rondelle (2).

6. Rondelle à fente selon l'une des revendications qui précèdent,
**caractérisée en ce que** les côtés de la rondelle (2a, 2b) séparés l'un de l'autre par la fente (4) sont reliés mutuellement par un renforcement dans la zone de l'ouverture de fente (4a).

7. Rondelle à fente selon la revendication 6,
**caractérisée en ce que** le renforcement est formé par un élément de poignée (6) qui est éloigné par rapport au côté, en particulier, est incurvé, sur lequel la tête (13b) de la vis (13) se trouve et présente, dans la zone rapprochée de la fente (4), un espace libre ou un évidement (17) qui est plus grand que la tête de la vis (13b).

8. Rondelle à fente selon la revendication 7,
**caractérisée en ce que** l'élément de poignée (6) présente une structure qui augmente la résistance de la poignée, en particulier est ondulée ou présente des cannelures.

9. Rondelle à fente selon la revendication 7 ou 8,
**caractérisée en ce que** la découpure (17) présente une distance (d) par rapport à la rondelle (2).

10. Rondelle à fente selon l'une des revendications 7 à 9,
**caractérisée en ce que** la fente débouche dans un trou de tête de vis (25) préférentiellement rond qui est plus grand que la tête de vis (13b).

11. Rondelle à fente selon la revendication 10,
**caractérisée en ce qu'**une deuxième fente (4.1, 4.2) de largeur différente (b1, b2) est prévue qui s'étend d'un trou (3.1, 3.2) pour la tige de vis (13a) jusqu'au trou de la tête de vis (25).

12. Rondelle à fente seion la revendication 11,
**caractérisée en ce que**, les fentes (4.1, 4.2) sont disposées de manière à être opposées l'une par rapport à l'autre.

13. Rondelle à fente selon l'une des revendications qui précèdent,
**caractérisée en ce que** la rondelle (2) est oblongue dans le sens de la longueur de la(des) fente(s) (4; 4.1, 4.2).

14. Rondelle à fente selon la revendication 12 ou 13,
**caractérisée en ce que** la rondelle (2) est coudée autour d'un axe (de deux) axe(s) sommital (sommitaux) séparés l'un de l'autre (26a, 26b), courant entre les fentes (4.1, 4.2).

15. Rondelle à fente, en particulier selon Tune des revendications qui précèdent,
**caractérisés en ce que** le diamètre (a) du trou (3; 3.1, 3.2) pour la tige (13a) de la vis (13) est supérieur à la largeur (b) de la(des) fente(s) correspondante(s) (4; 4.1, 4.2).

16. Rondelle à fente, en particulier selon Tune des revendications qui précèdent,
**caractérisée en ce que** le bord de rive du trou (3; 3.1, 3.2) pour la tige (13a) de la vis (13) est interrompu par une phase (3a).
